# EUROPEAN PATENT APPLICATION

(11) **EP 2 360 957 A1**
(43) Date of publication of application: **24.08.2011**
(21) Application number: 10305144.7
(22) Date of filing: 11.02.2010
(51) Int. Cl.: H04W 16/14

(54) **Method and system to reduce interferences in a reuse 1 wireless radio cellular communication system**

(71) Applicant: Alcatel Lucent, 75008 Paris (FR)
(72) Inventor: Capdevielle, Véronique, 91620, NOZAY (FR); Feki, Afef, 91620, NOZAY (FR); Kumar, Vinod, 91620, NOZAY (FR)
(74) Representative: Hervouet, Sylvie

(57) **Abstract**

A method to reduce interferences, in a wireless radio cellular communication system comprising at least two cells (1, 2) using the same frequency bands to periodically emit a first kind of signal and alternately a second kind of signal, comprising the step of:
- estimating a quality of said first kind of signal emitted by one cell (1),
- deciding based upon the value of said quality, whether or not:
- delaying the time reference of at least said cell (1) with respect to the other cells (2) so that the first kind of signal of the delayed cell (1) is emitted at the same time that the second kind of signal of said others cells (2), and
- blocking emission of said second kind of signal from others cells (2) in the measure it would be emitted at the same time that the first kind of signal of said at least one delayed cell (1).

## Description

The technical domain of the invention is the domain of communication networks, and particularly reuse 1 wireless radio cellular communication system.

More particularly, the invention concerns a method and a system to reduce interferences as suffered by a first kind of signal.

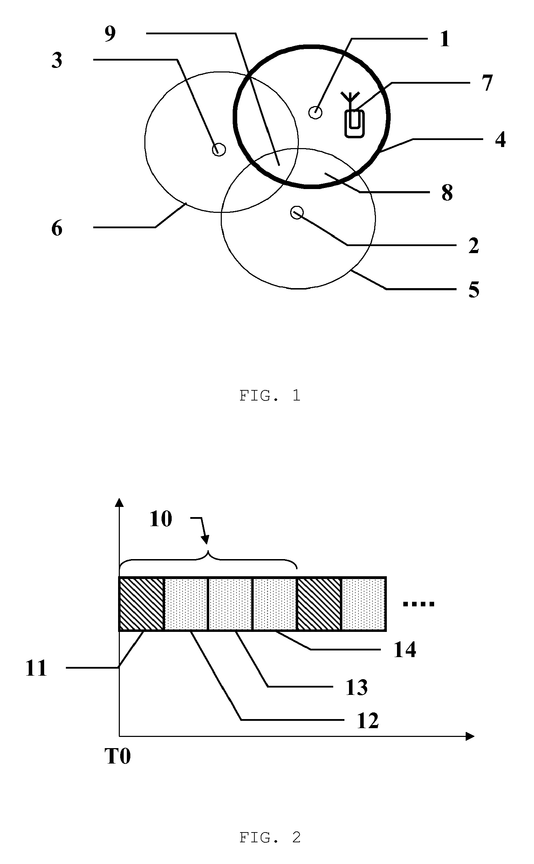

The invention is intended to be applied to reuse 1 wireless radio cellular communication system. In such a system, as shown at figure 1, cells 1, 2, 3, are spread over a given geographical zone so as to cover it, that is, to provide wireless communication services to a user/mobile terminal 7 located in the vicinity of a cell 1, 2, 3. The respective areas/radio ranges 4, 5, 6 of neighbouring cells 1, 2, 3 necessarily overlap. In a reuse 1 system all cells emit radio signals using the same frequency band.

Since all cells 1, 2, 3, use the same frequency band, interferences necessarily occur, especially in common covered zones. Zone 8, shared between cells 1 and 2 may be subject to interference from these cells. In zone 9, which is covered by the three cells 1, 2, 3, interferences may occur between signals from these three cells.

The down link, from a cell 1, 2, 3, to a mobile terminal 7 carries on a first kind of signal and a second kind of signal. Time is periodically shared between these two kinds of signal according to a frame 10. Figure 2 illustrates a sample of such a frame 10. Said frame 10, endlessly repeated as soon as it finishes, and so defining a period equal to its duration, is divided into four slots 11, 12, 13, 14. One slot 11 is here dedicated to said first kind of signal as denoted by a hashed texture, while the others slots 12-14 are dedicated to said second kind of signal, as denoted by a dotted texture.

Let us consider the first kind of signal is a more important signal (e.g. a control signal) than the second kind of signal (e.g. a data signal) and that priority may be given to a good transmission of said first kind of signal.

All cells are, by default, synchronised so that all of their respective frames start at the same time T0. Since a reuse 1 hypothesis is made, all signals, and particularly the first kind of signal emitted during slot 11 are emitted by all cells 1, 2, 3, and particularly neighbours cells on the same frequency band and at the same time, and thus potentially create interferences. Beyond a given level of interference, the transmission of a signal may not be sufficient to provide an associated function.

In a reuse 1 system, it is known to use orthogonality, between signals emitted at the same time in potentially interfering ranges. Orthogonality may theoretically be provided e.g. by using Zadoff Chu sequences. This is theoretic because orthogonality is never perfect, and interferences may always be present even to a lesser extent. Moreover, even orthogonal signals are interfering, and separability of orthogonal signals gets more difficult as the cells that emit them become closer. The use of orthogonal signals is not sufficient to avoid interferences.

Since it is an actual trend, e.g. in small / femto / pico cells networks to reduce the distance between cells in order to increase the available throughputs, a method to reduce interference in such a reuse 1 cell system is of great interest.

The object of the invention is a method to reduce interferences, in a wireless radio cellular communication network comprising at least two cells using the same frequency bands to periodically emit a first kind of signal and alternately a second kind of signal, **characterized in that** it comprises the step of:
- estimating a quality of said first kind of signal emitted by one cell,
- deciding based upon the value of said quality, whether or not:
- delaying the time reference of at least said cell with respect to the other cells so that the first kind of signal of the delayed cell is emitted at the same time that the second kind of signal of said others cells, and
- blocking emission of said second kind of signal from others cells in the measure it would be emitted at the same time that the first kind of signal of said at least one delayed cell.

According to another feature of the invention, the quality estimating step comprises determining a probability of successfully receiving said emitted first kind of signal over the cell area.

According to another feature of the invention said probability is computed from experienced carrier to interference ratio, CIR, and experienced carrier to noise ratio, CNR.

According to another feature of the invention the deciding step balances said probability with a degradation caused by blocking emission of said second kind of signal.

According to another feature of the invention the periodical emission is made according to a periodical frame equally divided into slots, each slot being dedicated either to a first kind of signal or to a second kind of signal, and wherein the delay applied to said time reference is a multiple of a slot duration.

According to another feature of the invention, the method is applied to the LTE norm, with the first kind of signal being a primary synchronisation signal, P-SS, a secondary synchronisation signal S-SS, or a physical broadcast signal PBS, and the second kind of signal being data radio block, RB.

According to another feature of the invention, the decision to apply or not a delay, and the respective delays of each cell, are determined in a centralized or in a distributed way.

The invention also concerns a system to reduce interferences, in a wireless radio cellular communication system comprising at least two cells using the same frequency bands to periodically emit a first kind of signal and alternately a second kind of signal, comprising:
- means for estimating a quality of said first kind of signal emitted by one cell,
- means for deciding based upon the value of said quality, whether or not to activate
- means for delaying the time reference of at least said cell with respect to the other cells so that the first kind of signal of the delayed cell is emitted at the same time that the second kind of signal of said others cells, and
- means for blocking emission of said second kind of signal from others cells in the measure it would be emitted at the same time that the first kind of signal of said at least one delayed cell.

An advantage of the invention is to permit to reduce interferences between cells, even when the average distance between cells decrease, without reducing the range/power of radio emissions.

An induced advantage is that said reduction of the distance between cells allows for a global increase of the throughput of the network as seen by the mobile terminals.

Other features, details and advantages of the invention will become more apparent from the detailed illustrating description given hereafter with respect to the drawings on which:
- figure 1 is a schematic top view of a geographic area covered by cells,
- figure 2 is a diagram of an illustrative frame,
- figure 3 is a diagram showing delaying and blocking operations,
- figure 4 illustrates the method in the case of LTE frames,
- figure 5 shows bandwidth allocation in three different cases.

In a typical wireless radio cellular communication network, as figured at figure 1, at least two cells 1, 2, 3 use the same frequency band. All cells periodically emit a first kind of signal and alternately a second kind of signal. When, two neighbour cells emit the same kind of signal at the same time, interferences may occur. As previously mentioned, the first kind of signal is more important, for instance because it is a control/synchronisation signal necessary to establish a communication and then transfer data with the second kind of signal. One idea of the invention is then to give priority to said first kind of signal, in order to guarantee a minimally good transmission to realize the signalling/synchronisation function provided by said first kind of signal, at a possible expense of a reduction of performance for the second kind of signal, if needed.

The main idea of the invention is to optionally apply, if needed, a delay to the time reference of at least one cell 1 with respect to the other cells 2, 3.

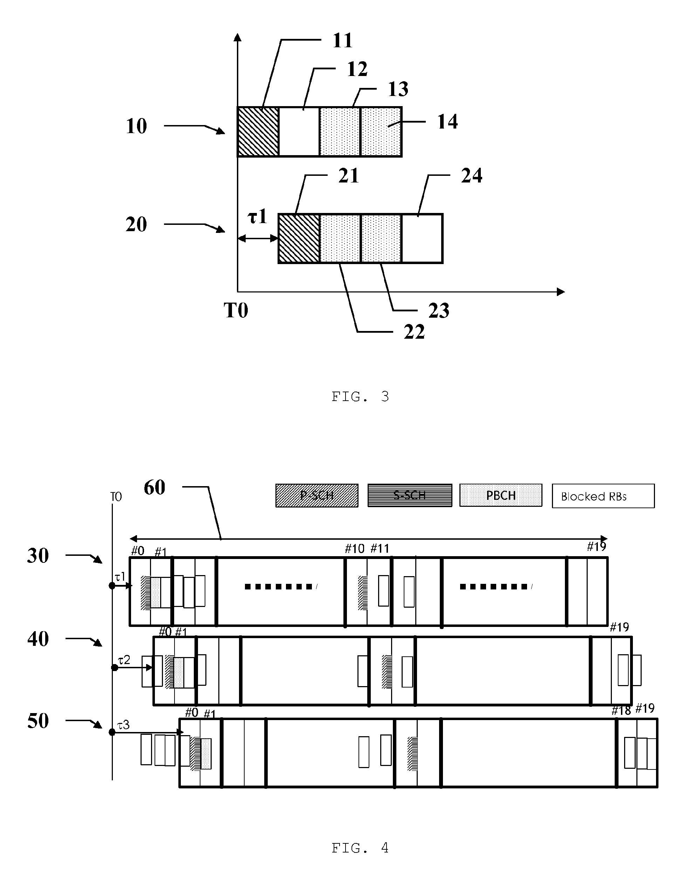

As figured on figure 3, the respective frames 10, 20 of two neighboring and effectively interfering cells 1, 2 have been delayed so as to be staggered one from the others. Frame 10 starts at T0. Frame 20 has been delayed of τ1 with respect to T0. The first kind of signal is emitted during slot 11 for frame 10 and during slot 21 for frame 20. So the first kind of signal from cell 1 and the first kind of signal from cell 2 do not interfere with each other.

But a possible interference may also come from the second kind of signal in the measure it shares the same frequency band. To guarantee a good transmission of the first kind of signal from cell 2 (frame 20), the corresponding slot 12 of frame 10 is freed for the first kind of signal, and said second kind of signal is blocked during said slot 12 of cell 1, in the measure it could possibly interfere, that is, it is not emitted at the same time and in the frequency bands that could interfere with the first kind of signal. Similarly, the fourth slot 24 of frame 20 is blocked in order not to risk interference with the first kind of signal emitted during first slot 11 of frame 10. The blocked slots are figured by a white/empty texture.

So doing, the second kind of signal only disposes of two remaining full slots 13, 14 (or 22, 23) instead of three when all the frames start at T0. The performance of said second kind of signal is then reduced, e.g. in term of throughput if said second kind of signal carries data.

The main feature of the invention is to provide a trade-off between a guarantee provided to the first kind of signal, while not reducing the performance of the second kind of signal more than just necessary.

To reach said trade-off, an important feature is to determine if and in what extend the function associated to the first kind of signal is assured, that is to determine if the amount of interference remains acceptable or if it is too disturbing to the first kind of signal. Said determination is made by estimating a quality of emission of said first kind of signal, as emitted by a cell 1.

Then based upon said quality value, it is decided whether or not to apply the delaying and blocking operations. This depends on the compared performance obtained in the realisation of the function associated to the first kind of signal balanced with the decrease of performance on the second kind of signal, with or without any delaying/blocking.

If the function associated with the first kind of signal can be satisfactory realized with the cells synchronized on the same T0, no delay is applied, thus keeping the performance of second kind of signal maximum. If not, a delay configuration is tried that leads to a decrease in the performance of the second kind of signal. Different delay configurations may then be tried, with a crescent degradation of performance of second kind of signal, until the function associated with the first kind of signal can be satisfactory realized. So doing the function is guaranteed to an acceptable level, while suffering only a minimum degradation of performance of said second kind of signal.

The criteria used to estimate quality of transmission of said first kind of signal may be indicative of a successful reception of said first kind of signal, e.g. in a form of a probability of successfully receiving said signal. Said probability may e.g. be expressed as a ratio of the portion of a cell area where a receiver 7 successfully receives said first kind of signal to the total cell area 4. A successful reception means that the function associated to said first kind of signal may be achieved by the receiver 7. For example, if said first kind of signal is a synchronisation signal, the associated function is the synchronisation of a receiver 7. The quality is satisfactory when a receiver 7 receives enough power/quality of signal and for a sufficient duration to realize said synchronisation with the cell 1 at stake.

One way to estimate such a probability of successfully receiving said signal may be from an experienced carrier to interference ratio, CIR, and/or from an experienced carrier to noise ratio, CNR. Several ways to obtain said CIR or CNR and to correlate them with a probability of reception are well known to the one skilled in the art.

The step that decides to delay at least one time reference cell with respect to the other cells and the associated blocking(s) may choose not to delay/block, if the determined quality probability is sufficient. This means that the interference level is not so disturbing to decrease said probability under a given threshold, all of the frames may remain aligned to the same time reference T0, thus providing the least/no degradation to the second kind of signal. Said deciding step thus takes into account the reach of a minimal interference clearing by delaying/blocking on one hand and balances it with the degradation caused by said delaying/blocking. The state finally decided is optimized to globally realize the function associated to the first kind of signal with a minimum given probability, while minimally reducing the performance of said second kind of signal.

As figured at figures 2 or 3, the periodical emission of each cell 1-3 is made according to a periodical frame 10, 20. Said frame 10, 20 is equally divided into slots 11-14, 21-24, each slot being dedicated either to a first kind of signal or to a second kind of signal. On figure 3, slots 11 and 21 are dedicated to the first kind of signal, while slots 12-14, 22-24, are (initially, that is before blocking) dedicated to the second kind of signal. According to an advantageous feature, the delay applied to the time reference is a multiple of a slot duration. In an obvious manner, it is also lesser than the duration of a whole frame 10, 20.

In one preferred embodiment, said method may be applied to the managing of interferences in a cell network according to the long Term Evolution, LTE, protocol. As represented at figure 4, a LTE frame 30, 40, 50 has a total duration 60 of 10 ms. Each frame 30, 40, 50 is equally divided into ten subframes of 1 ms and twenty slots numbered #0-#19. A slot duration is thus 0,5 ms. In each frame 30, 40, 50, the first #0 and eleventh #10 slots are dedicated to the transmission of a primary synchronisation signal, PS-S, (also denoted primary synchronisation channel, PSCH, figured by an biased hashed texture, and a secondary synchronisation signal, SS-S, (also denoted secondary synchronisation channel, SSCH, figured by a horizontal hashed texture). In each frame 30, 40, 50, the second #1 slot is dedicated to the transmission of a physical broadcast signal PBS (also denoted physical broadcast channel, PBCH, figured by a dotted texture). These three signals are necessary to synchronize a communication between a mobile terminal 7 and a cell 1. The mobile terminal 7 must successively receive these three signals from a given cell 1 in order to synchronize with said cell 1 and receive the necessary information to in turn emit toward said cell 1. These three signals are considered to be first kind of signals with the meaning of the invention.

All of the remaining slots #2-#9 and #11-#19 are dedicated to radio blocks, RBs, carrying data from cell 1 to the mobile terminals in the cell area 4. These radio block signals are considered to be second kind of signals with the meaning of the invention.

From an absolute time reference T0, frame 30 is delayed of a duration τ1 equal to one slot duration (0,5 ms), frame 40 is delayed of a duration τ2 equal to two slot durations, and frame 50 is delayed of a duration τ3 equal to three slot durations. The relative delays are then one slot duration between frames 30 and 40 and between frames 40 and 50, and two slot durations between frames 30 and 50.

Since slot #0 of frame 30 is reserved to a first kind of signal (PS_S and SS_S), corresponding (timely in regard) slots #19 of frame 40 and #18 of frame 50 are consequently blocked, as figured by empty rectangles in slots, figuring blocked RBs. Since slot #10 of frame 30 is reserved to a first kind of signal (PS_S and SS_S), corresponding slots #9 of frame 40 and #8 of frame 50 are consequently blocked. Since slot #1 of frame 30 is reserved to a first kind of signal (PBS), corresponding slots #0 of frame 40 and #19 of frame 50 are consequently blocked.

Similarly, since slot #0 and #1 of frame 40 are reserved to a first kind of signal (PS_S, SS_S and PBS), corresponding slots #1 and #2 of frame 30 and #19 and #0 of frame 50 are consequently blocked.

Similarly, since slot #0 and #1 of frame 50 are reserved to a first kind of signal (PS_S, SS_S and PBS), corresponding slots #2 and #3 of frame 30 and #1 and #2 of frame 40 are consequently blocked.

Similarly, slot #10 of frame 30, slot #10 of frame 40 and slot #10 of frame 50 are reserved, and corresponding slots #11 and #12 of frame 30, #9 and #10 of frame 40 and #8 and #9 of frame 50 are consequently blocked.

Other slots, not interfering with any first kind of signal from any frame 30, 40, 50, are wholly dedicated to second kind of signal RB.

Since some slots are blocked, RB signal suffers from a degradation of performance. Since RB are used to carry data, said degradation may be indicated as a throughput decrease.

It has to be noted that the blocking of the emission of said second kind of signal RB may be advantageously limited to the measure in which it could interfere with a first kind of signal, that is where said second kind of signal RB would be emitted at the same time and at the same frequency that the first kind of signal of any other frame of a neighbour delayed cell. Said measure is to be considered with respect to time and to frequency.

With respect to time, as shown by figure 4, if PS_S and SS_S together are timely positioned during the second half of their slot (slot #0), then consequently the second kind of signal RB needs only be blocked during a corresponding second half of slot #19/frame 40 or slot #18/frame 50. In LTE norm, a slot is divided into seven symbols, with the sixth allocated to SS_S and the seventh allocated to PS_S. Blocking needs only to be effective during said last two symbols.

Similarly, if PBS is timely positioned during the first half of its slot (#1), then first, this allows a concomitant use of said slot by frame 30/PBS and frame 40/PS_S and SS_S, since they are not overlapping. Second, the second kind of signal RB needs only be blocked during the first half of slot #19/frame 40 or slot #18/frame 50. In LTE norm, the four first symbols are allocated to PBS, which then do not overlap with PS_S or SS_S. Blocking needs only to be effective during said first four symbols.

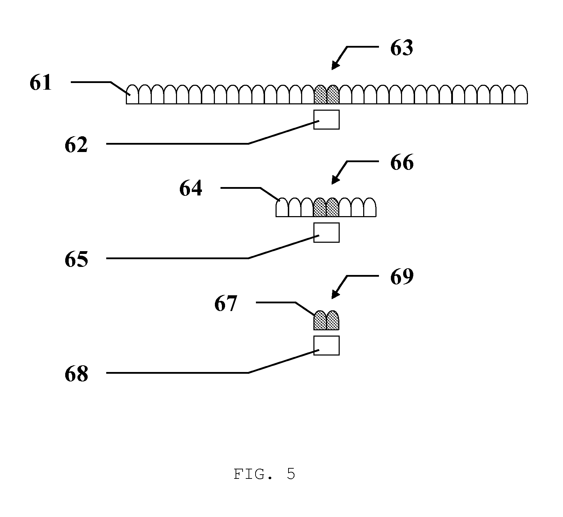

With respect to frequency, figure 5 shows three different frequency allocations, depending on the total bandwidth allocated. The first case corresponds to a 20 MHz total frequency band. Said band is wholly shared between data RB 61, while the part allocated to first kind synchronisation (or physical broadcast) signals 62 is always limited to a 1,4 MHz band located at the centre of the total frequency band. Only channels 63 in frequency regard to said synchronisation signals 62, denoted by gray texture, need to be blocked, the remaining frequency bands on both sides may still be allocated to second kind of signals RB.

The second case corresponds to a 5 MHz total frequency band. Said band is wholly shared between data RB 64, while the part allocated to first kind synchronisation (or physical broadcast) signals 65 is still limited to a central 1,4 MHz band. Only channels 66 in frequency regard to said synchronisation signals 65, need to be blocked, the remaining frequency bands on both sides may still be allocated to second kind of signals RB.

The third case corresponds to a 1,4 MHz total frequency band. Said band is wholly shared between data RB 67, while the part allocated to fist kind synchronisation (or physical broadcast) signals 68 is still limited to a central 1,4 MHz band. Channels in frequency regard to said synchronisation signals 68, need to be blocked, that is here, all channels.

The method as described, in any of its embodiments, necessitates interactions between neighbouring cells. Said interactions may be negotiated between neighbouring cells e.g. via the communication network that spreads between and links all cells, by means of exchanged messages indicating among others points what delay, with respect to an absolute reference time T0, is applied to each cell.

Said communications between cells is most needed when the method is implemented in a distributed way, where each cell, or at least some cells, decides for itself or a given group of cells, depending of effective delays applied by the neighbour cells, to apply (or not) a delay and what delay to apply. Said communication means between cells are also used by a cell to modify its emission schedule so as to block the slots corresponding to first kind of signal emitted by neighbouring cells according to their announced delays.

According to another embodiment, instead of distributed decision and determination of respective delays, realized by each or some of the cells, the method may be implemented in a centralized way. In this case a given logical unit, e.g. a central unit or a cell, is in charge of globally determining for each cell if it has to be delayed and to what extend. Said central unit gathers all necessary data (network topology, CIR, CNR, ...) and determines for each cell a given (may be zero) delay to apply. The central unit then communicates to each cell and informs it of the delay to apply and of the slots (or portions of slots) to block.

The invention as described provides an efficient mean of reducing interferences in a reuse 1 wireless network. A given function associated to a first kind of signal may be guaranteed with a given probability at the expense of a decrease of performance of a second kind of signal. However, it has to be noted, that since interferences are temporally managed, distances between cells can be drastically reduced without reducing emitting powers. Said reduction in the distance between cells allows for a densification in the network. The final advantage of the invention is that said densification allows for an increase of the global network throughput that broadly encompasses the decrease suffered from the blocking of second kind of signal induced by the invention. This is particularly valuable in the actual small/femto/pico cell networks.

## Claims

1. A method to reduce interferences, in a wireless radio cellular communication network comprising at least two cells (1, 2) using the same frequency band to periodically emit a first kind of signal and alternately a second kind of signal, **characterized in that** it comprises the step of:
- estimating a quality of said first kind of signal emitted by one cell (1),
- deciding based upon the value of said quality, whether or not:
- delaying the time reference of at least said cell (1) with respect to the other cells (2) so that the first kind of signal of the delayed cell (1) is emitted at the same time that the second kind of signal of said others cells (2), and
- blocking emission of said second kind of signal from others cells (2) in the measure it would be emitted at the same time that the first kind of signal of said at least one delayed cell (1).

2. The method of claim **1,** wherein the quality estimating step comprises determining a probability of successfully receiving said emitted first kind of signal over the cell area (4).

3. The method of claim **2,** wherein said probability is computed from experienced carrier to interference ratio, CIR, and experienced carrier to noise ratio, CNR.

4. The method of claim **2** or **3,** wherein the deciding step balances said probability with a degradation caused by blocking emission of said second kind of signal.

5. The method of any one of claims **1** to **4,** wherein the periodical emission is made according to a periodical frame (10) equally divided into slots (11-14), each slot being dedicated either to a first kind of signal or to a second kind of signal, and wherein the delay applied to said time reference is a multiple of a slot duration.

6. The method of claim **5,** applied to the LTE norm, with the first kind of signal being a primary synchronisation signal, P-SS, a secondary synchronisation signal S-SS, or a physical broadcast signal PBS, and the second kind of signal being data radio block, RB.

7. The method of any one of claims **1** to **6,** wherein the decision to apply or not a delay, and the respective delays of each cell (1, 2, 3), are determined in a centralized or in a distributed way.

8. A system to reduce interferences, in a wireless radio cellular communication system comprising at least two cells (1, 2) using the same frequency band to periodically emit a first kind of signal and alternately a second kind of signal, **characterized in that** it comprises:
- means for estimating a quality of said first kind of signal emitted by one cell (1),
- means for deciding based upon the value of said quality, whether or not to activate
- means for delaying the time reference of at least said cell (1) with respect to the other cells (2) so that the first kind of signal of the delayed cell (1) is emitted at the same time that the second kind of signal of said others cells, and
- means for blocking emission of said second kind of signal from others cells (2) in the measure it would be emitted at the same time that the first kind of signal of said at least one delayed cell (1).
